(19) Europäisches Patentamt
European Patent Office
Office européen des brevets

(11) Publication number: **0 202 622 B1**

(12) # EUROPEAN PATENT SPECIFICATION

(45) Date of publication of patent specification: **09.10.91**

(51) Int. Cl.5: **G06F 3/08**, G07F 7/10, G06K 7/06, G06K 19/06

(21) Application number: **86106680.1**

(22) Date of filing: **16.05.86**

(54) **Reader and writer for an IC card.**

(30) Priority: **18.05.85 JP 104939/85**

(43) Date of publication of application:
**26.11.86 Bulletin 86/48**

(45) Publication of the grant of the patent:
**09.10.91 Bulletin 91/41**

(84) Designated Contracting States:
**DE FR GB NL**

(56) References cited:
**EP-A- 0 063 794**
**WO-A-84/04612**
**US-A- 4 105 156**

**Elektronik, vol. 19, Sept. 1986, Dipl. Ing. Roland Vogt, München page 100**

(73) Proprietor: **Hitachi Maxell Ltd.**
**No 1-1-88, Ushitora Ibaraki-shi**
**Osaka-fu(JP)**

(72) Inventor: **Kitta, Kenichi**
**2196-507 Hirai Hinodemachi**
**Nishitama-gun Tokyo(JP)**
Inventor: **Shinagawa, Touru**
**1468-5, Furumagi Ishigemachi**
**Yuki-gun Ibaragi-ken(JP)**
Inventor: **Takamori, You 103, No. 2 Fuji-corpo**
**3-31-35 Higashikoigakubo**
**Kokubunji-shi Tokyo(JP)**

(74) Representative: **Selting, Günther, Dipl.-Ing. et al**
**Deichmannhaus am Hauptbahnhof**
**W-5000 Köln 1(DE)**

**EP 0 202 622 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a reading and writing device for use in reading and writing information from and into an IC card.

There have been used vending machines which sell goods by a card without money. As the commercially available cards, there are various kinds of cards such as magnetic cards in which a magnetic sheet is installed or IC cards having a data processing unit in the form of an integrated circuit. However, the memory capacity of the magnetic card is not so large. Also the memory capacity of the conventional IC card using RAM (random access memory) is not so large because the memory capacity is limited by a power supply used in the IC card.

In order to increase the memory capacity of an IC card a PROM (programmable read only memory) is used as memory means. Such an IC card is known for example from US-A-4 105 156. For maintaining the data stored in the PROM no battery is necessary in the IC card whereby the capacity of the memory can be increased. However, as a PROM, which is a non-volatile memory, EPROM, EEPROM and fuse ROM are used. These PROMs are respectively different in the drive condition (write-in power supply condition). On the other hand usually the conventional card reader and writer can be operable under only one type of the drive conditions, therefore, conventional card reader and writer can not be used for IC cards with various types of PROMs. For example, the card reader and writer designed for card using the EPROM requires a power source for supplying +21 volt as write-in voltage. The card reader and writer for the card using EEPROM requires a power supply for generating +5 volt as write-in voltage. In case the IC card of which the write-in voltage is not compatible is inserted in one card reader and writer, wrong data may be written in the memory and in the worst case, PROM 5 may be damaged. However, in order to make the IC cards practical use, it is essential necessary to provide a card reader and writer which is compatible to IC cards having different drive conditions.

It is the object of the present invention to provide a card reader and writer which is compatible with the various kinds of IC cards having different drive conditions.

According to the present invention there is provided a card reader and writer according to the preamble of claim 1 further including means for reading information indicating the write-in power supply condition, the information being contained in means carried by the IC card, and means for changing the write-in power supply condition of the card reader and writer corresponding to the result of the reading.

These and other features of the present invention will be come a parent from the following description taken in conjunction with a preferred embodiment thereof with reference to the accompanying drawings, throughout which like parts are designated by like reference numerals, and in which:

- Fig. 1 is a top plan view showing an example of an IC card using PROM,
- Fig. 2 is a block diagram of a circuit arrangement used in the IC card shown in Fig. 1,
- Fig. 3 is a block diagram showing an embodiment of a card reader and writer according to the present invention,
- Fig. 4 is a block diagram showing an example of write-in power supply circuit used in the card reader and writer shown in Fig. 3,
- Fig. 5 is a flow chart showing the operation of the card reader and writer shown in Fig. 3,
- Fig. 6 is a top plan view of one modification of the IC card according to the present invention, and
- Fig. 7 is a cross sectional view showing an essential portion of the IC card shown in Fig. 6.

Fig. 1 shows one example of an IC card, wherein 1 denotes a card body, 2 denotes a circuit board, 3-1 to 3-8 denote external connecting terminal for the application of a power supply, data input and output, clock input and ground. 4 denotes a data processor, 5 denotes a PROM for storing data.

As shown in Fig. 1, in the IC card, there is defined a recess in which the circuit board having the data processor 4 and IC PROM is embeded. The external terminals 3-1 to 3-8 are formed on the circuit board 2 so that the external terminals are respectively exposed from the card body 1 for connection with the external circuit arrangement. When the proposed IC card is inserted in a card reader and writer (not shown), the circuits in the IC card and the card reader and writer are coupled through the external terminals 3-1 to 3-8 so as to communicate between the data processor 4 and a host computor connected to the card reader and writer.

The PROM 5 is used for storing the data and the data processor 4 processes the data from the card reader and writer or the PROM 5 based on the program stored in the data processor 4.

The circuit arrangement in the IC card is shown in Fig. 2 in which 6 denotes a program memory, 7 denotes CPU, 8 denotes an address decoder, 9 denotes a data bus and 10 denotes an address bus. The program memory 6 stores a processing program and CPU 7 operates to write in and read out of the data stored in PROM 5 upon taking in the process program from the program memory 6 by accessing sequentially the addresses of the program memory 6 through the address bus 10 and the address decoder 8. In writing the data in the IC card, the data supplied from the card reader and writer through the data bus 9 can be written in a predetermined address of PROM 5 designated by the address signal fed from the CPU 7 through the address bus 10 and the address decoder 8. In reading the data, a predetermined address of PROM 5 designated by CPU 7 through the address bus 10 and address decoder 8 and the data read out from the designated address of PROM 5 are sent to the host computor through the data bus 9.

Referring to Fig. 3 showing an example of a card reader and writer according to the present invention, 11 denotes a host computor, 12 denotes a card reader and writer, 13 denotes an IC card.

The host computor 11 sends a command signal to the card reader and writer 12 and the IC card 13, on the other hand, the host computor 11 processes the data upon receipt from the IC card 13.

In the card reader and writer 12, there are provided a microprocessor 14 for judging the kinds of the IC cards and producing a control signal representing the kinds of the IC card by reading the data stored in the memory 5 of the IC card 13, a clock signal generator 15 and a power voltage supply for supplying a suitable voltage for write-in the data in the IC card 13. The voltage supply 16 is provided with a power supply 17 arranged to supply a write-in voltage $V_{EPROM}$ for writing the data in the EPROM, a second voltage $V_{EEPROM}$ for writing the data in the EEPROM and a third voltage $V_{FUSE}$ for writing the data in the fuse ROM and a selector 18 for selecting the output voltages of the power supply 17 in response to the signal from the microprocessor 14. The IC card 13 is the same as the IC card shown in Figs. 1 and 2 except that data representing the drive condition of the IC card such as the write-in voltage is written in the memory 5. Therefore, the like parts in Figs 1 and 2 are designated by like reference numerals and the details thereof are herein omitted. In the embodiment shown in Fig. 3, although the data processor 4 and memory 5 are separated, this is not essential but may be provided in various form, for example, the memory 5 may be included in the data processor 4. In Fig. 3, 19 denotes a bidirectional I/O signal line for communicating between the card reader and writer 12 and the IC card 13 to send the serial data, 20 denotes a voltage signal for writing-in the data in the data memory 5.

In operation, upon insertion of the IC card 13 in the card reader and writer 12, the insertion of the IC card is detected by the card reader and writer 12 and the clock signal generator 15 starts, the microprocessor 14 and the IC card 13 are driven. The microprocessor 14 sends a command signal for requesting the write-in voltage i.e., the access condition of the IC card to the CPU 7 installed in the IC card 13 through the I/O line 19 in the step S1. The CPU 7 decodes the command in the step S3 and returns the access information of the data memory 5 preliminarily written in the specific area of the data memory 5 to the microprocessor 14 through the I/O signal line 19. Then the microprocessor 14 decodes the returned information in the step S3 and the program flow goes to the step S4 wherein the kinds of the access information or the write-in voltage is detected. When the information returned from the IC card 13 is access information of EPROM, the microprocessor 14 decodes returned information on the basis of the program preliminarily stored in the microprocessor 14 and produces a control signal of 2 bits such as (01) in the step S51. By this operation, the selector 18 is changed over to supply the write-in voltage $V_{EPROM}$ suitable for the EOROM in the steps S6. In cases an IC card having EEPROM is set in the card reader and writer 12, the microprocessor 14 generates a control signal (10) of 2 bits representing the EEPROM so that the selector 18 supply the write-in voltage $V_{EPROM}$ . In case an IC card having the fuse memory is set in the card reader and writer 12, the microprocessor 14 decodes data from the IC card 13 in a similar manner as mentioned above so as to supply the write-in voltage V $_{fuse}$.

After setting the write-in voltage from the power supply 16 of the card reader and writer 12 as mentioned above, the microprocessor 14 sends a signal representing that the initial condition is completely set to the host computor 11 in the step S6. Thus the data communication between the host computor 11 and the IC card 13 is started to write in the data in the IC card 13 in the steps S7 to S10.

In the above embodiment, the card reader and writer 12 is provided with the processor for judging the kinds of the data memory mounted on the IC card and the power supply for supplying the most suitable write-in voltage on the basis of the result of the judgement in the processor, the card reader and writer may be compatible with the IC cards using any one of the memories such as EPROM, EEPROM and fuse ROM. As the processor 14 is provided in the card reader and writer 12 so as to set the write-in power supply condition without using the host computor, the period of time between insertion of the IC card in the card reader and writer and the setting of the drive condition is made short. Also it is an advantage that there is no need to load the burden of the condition setting for the host computor.

Although in the preferred embodiment mentioned above, there is used a microprocessor 14 so arranged as to read the write-in power supply condition information of the data memory which stores the data as a parameter showing the write-in condition, the scope of the present invention is not limited to the embodiment described above, for example, mechanical means, electrical means or optical means may be used as the device for judging the write-in power supply condition by mechanical means, electrical means or optical means.

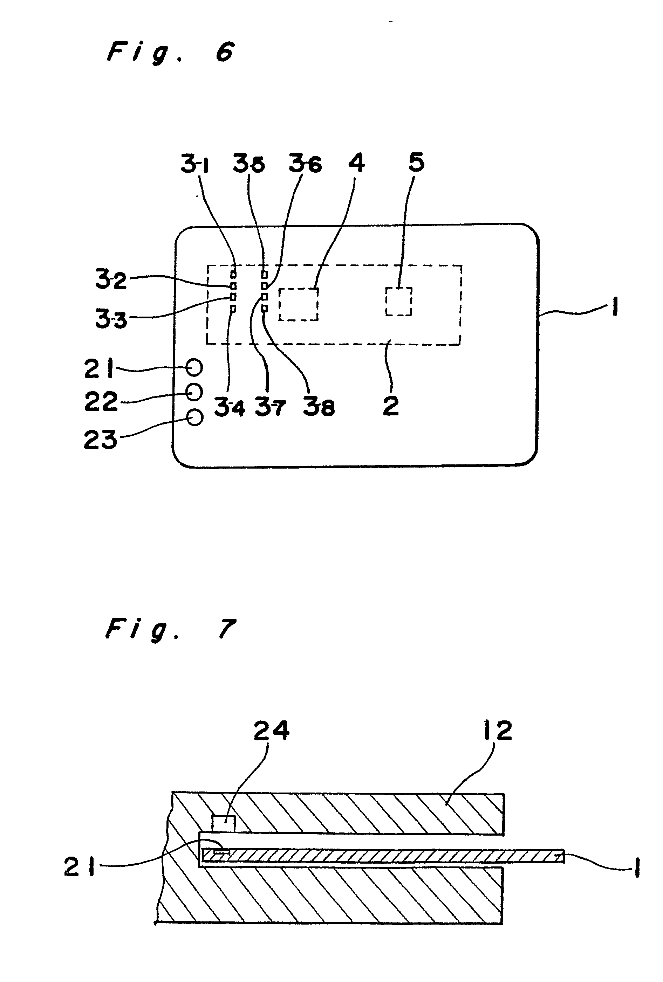

Referring to Figs. 6 and 7, there is provided any one of light reflecting members 21, 22 and 23 on one side edge portion of the IC card 13 corresponding to the write-in condition for example the EPROM, EEPROM and fuse ROM. The card reader and writer 12 is provided with light emitting and receiving devices (only one device 24 corresponding to the light reflecting member 21 is depicted in Fig. 7) juxtaposed corresponding to the position of the light reflecting members 21, 22 and 23. When the IC card 13 with the light reflecting member 21 is inserted into the card reader and writer 12, the light receiving device 24 detects the light reflecting member 21 so that one of the write-in voltage is selected. Said light reflecting members 21 to 23 may be formed by an aluminium vaporing in the form of a circular shape. Also, in place of using light reflecting members and light emitting and receiving device, mechanical contacts may be used as the device for judging the write-in power supply condition.

It is an advantage of the present invention that the card reader and writer according to the present invention can act to automatically select the write-in power supply condition depending on the kinds of the IC card, the card reader and writer can be made compatible with the various kinds of the IC card, so that the practice usefulness of the card reader and writer can be increased.

It is another advantage that since the processor for judging the kinds of the IC card is provided in the card reader and writer, the processing speed becomes short whereby no additional load is burdened to the host computor.

## Claims

1. A card reader and writer (12) for transferring data between a host computer (11) and an IC card (13) mounted on a card reader and writer, said IC card (13) having IC memory means (5) for storing data under a predetermined write-in power supply condition,

   **characterized in**

   that said card reader and writer comprises means (14;24) for reading information indicating the write-in power supply condition, said information being contained in means (5;21-23) carried by said IC card, and means (16,17,18) for changing the write-in power supply condition of the card reader and writer corresponding to the result of the reading.

2. The card reader and writer according to claim 1, wherein the write-in power supply condition of the IC card is a power supply voltage of the IC card (13) and that a microprocessor (14) of the card reader and writer reads the write-in power supply condition information stored in said memory means (5) of said IC card (13).

3. The card reader and writer according to claim 1, wherein the write-in power supply condition information is electrically, mechanically or optically stored in means (5;21-23) attached to said IC card and the reading means (14;24) reads the power supply condition information electrically, optically or mechanically.

4. The card reader and writer according to any one of claims 1 to 3, wherein said memory means (5) is EPROM, EEPROM, and/or fuse ROM.

## Revendications

1. Un dispositif de lecture et d'écriture de carte (12) destiné à transférer des données entre un ordinateur hôte (11) et une carte à circuit intégré (13) qui est placée sur un dispositif de lecture et d'écriture de carte, cette carte à circuit intégré (13) comportant des moyens de mémoire à circuit intégré (5) qui sont destinés à enregistrer des données dans une condition d'alimentation d'écriture prédéterminée,

   **caractérisé** en ce que

   le dispositif de lecture et d'écriture de carte comprend des moyens (14; 24) qui sont destinés à lire une information indiquant la condition d'alimentation d'écriture, cette information étant contenue dans des moyens (5; 21-23) qui sont portés par la carte à circuit intégré, et des moyens (16, 17, 18) qui sont destinés à changer la condition d'alimentation d'écriture du dispositif de lecture et d'écriture de carte, en correspondance avec le résultat de la lecture.

2. Le dispositif de lecture et d'écriture de carte selon la revendication 1, dans lequel la condition d'alimentation d'écriture de la carte à circuit intégré est une tension d'alimentation de la carte à circuit intégré (13), et dans lequel un microprocesseur (14) du dispositif de lecture et d'écriture de carte lit l'information de condition d'alimentation d'écriture qui est enregistrée dans les moyens de mémoire (5) de la carte à circuit intégré (13).

3. Le dispositif de lecture et d'écriture de carte selon la revendication 1, dans lequel l'information de condition d'alimentation d'écriture est enregistrée de façon électrique, mécanique ou optique dans des moyens (5; 21-23) qui sont incorporés à la carte à circuit intégré, et les moyens de lecture (14; 24) lisent l'information de condition d'alimentation de façon électrique, optique ou mécanique.

4. Le dispositif de lecture et d'écriture de carte selon l'une quelconque des revendications 1 à 3, dans lequel les moyens de mémoire (5) consistent en une mémoire EPROM, une mémoire EEPROM, et/ou une mémoire morte à fusibles.

**Patentansprüche**

1. Kartenlese- und -schreibvorrichtung (12) zum Übertragen von Daten zwischen einem Hauptcomputer (11) und einer an einer Kartenlese- und -schreibvorrichtung angebrachten IC-Karte (13), wobei die IC-Karte (13) IC-Speichereinrichtungen (5) zum Speichern von Daten bei einer vorbestimmten Einschreibenergieversorgungsbedingung aufweist,

   dadurch gekennzeichnet,

   daß die Kartenlese- und -schreibvorrichtung Einrichtungen (14; 24) zum Lesen von die Einschreibenergieversorgungsbedingung anzeigenden Informationen, wobei die Informationen in von der IC-Karte getragenen Einrichtungen (5; 21-23) enthalten sind, und Einrichtungen (16, 17, 18) zum Wechseln der Einschreibenergieversorgungsbedingung der Kartenlese- und -schreibeinrichtung entsprechend dem Ergebnis des Lesens aufweist.

2. Kartenlese- und -schreibvorrichtung nach Anspruch 1, bei welcher die Einschreibenergieversorgungsbedingung der IC-Karte eine Energieversorgungsspannung der IC-Karte (13) ist, und daß ein Mikroprozessor (14) der Kartenlese- und -schreibvorrichtung die in der Speichereinrichtung (5) der IC-Karte (13) gespeicherten Einschreibenergieversorgungsbedingungsinformationen liest.

3. Kartenlese- und -schreibvorrichtung nach Anspruch 1, bei welcher die Einschreibenergieversorgungsbedingungsinformationen elektrisch, mechanisch oder optisch in Einrichtungen (5 ; 21-23) gespeichert werden, die an der IC-Karte vorgesehen sind, und die Leseeinrichtung (14; 24) die Energieversorgungsbedingungsinformationen elektrisch, optisch oder mechanisch ausliest.

4. Kartenlese- und -schreibvorrichtung nach einem der Ansprüche 1 bis 3, bei welcher die Speichereinrichtung (5) ein EPROM, EEPROM und/oder ein Schmelzsicherungs-ROM ist.

Fig. 1

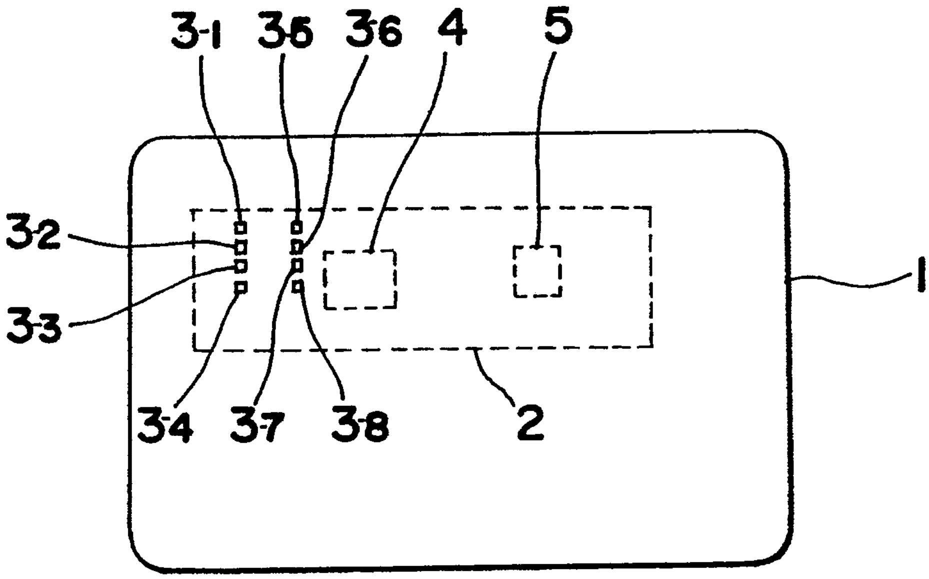
3-1
3-5
3-6
4
5
3-2
3-3
1
3-4
3-7
3-8
2

Fig. 2

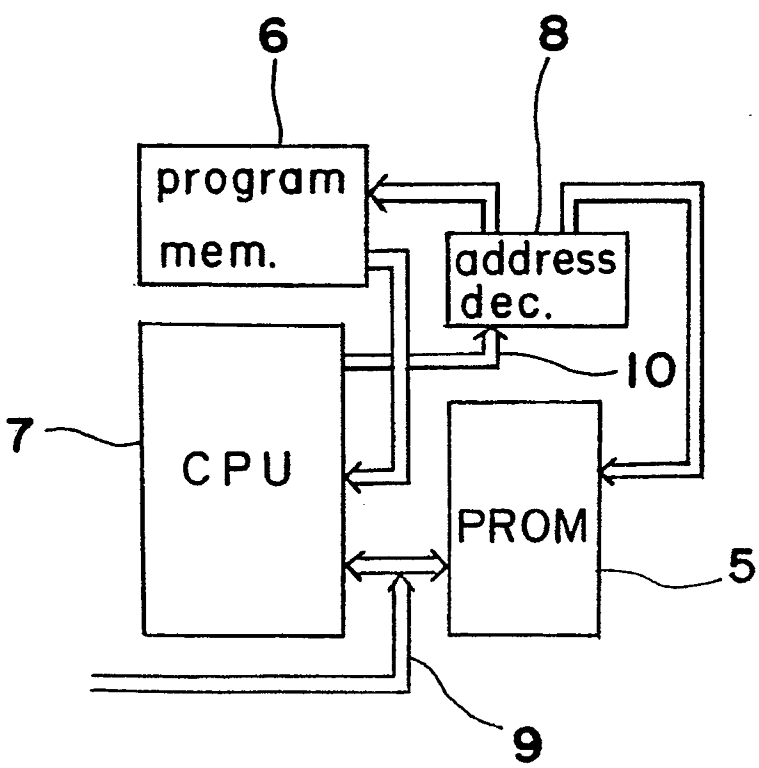
6
8
program
mem.
address
dec.
10
7
CPU
PROM
5
9

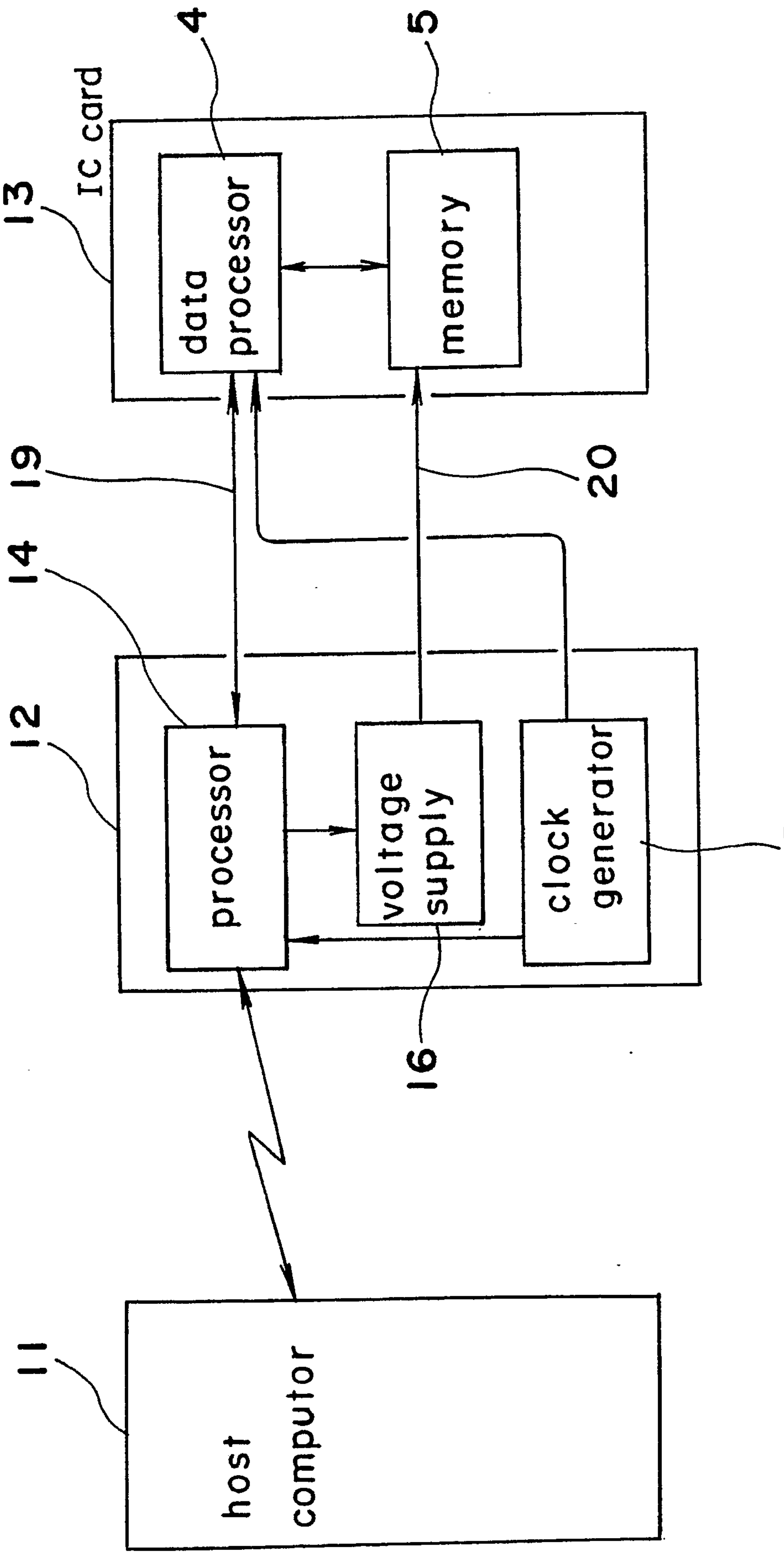
IC card
13
4
5
data processor
memory
19
20
14
12
processor
voltage supply
clock generator
15
16
11
host computor

Fig. 3

*Fig. 4*

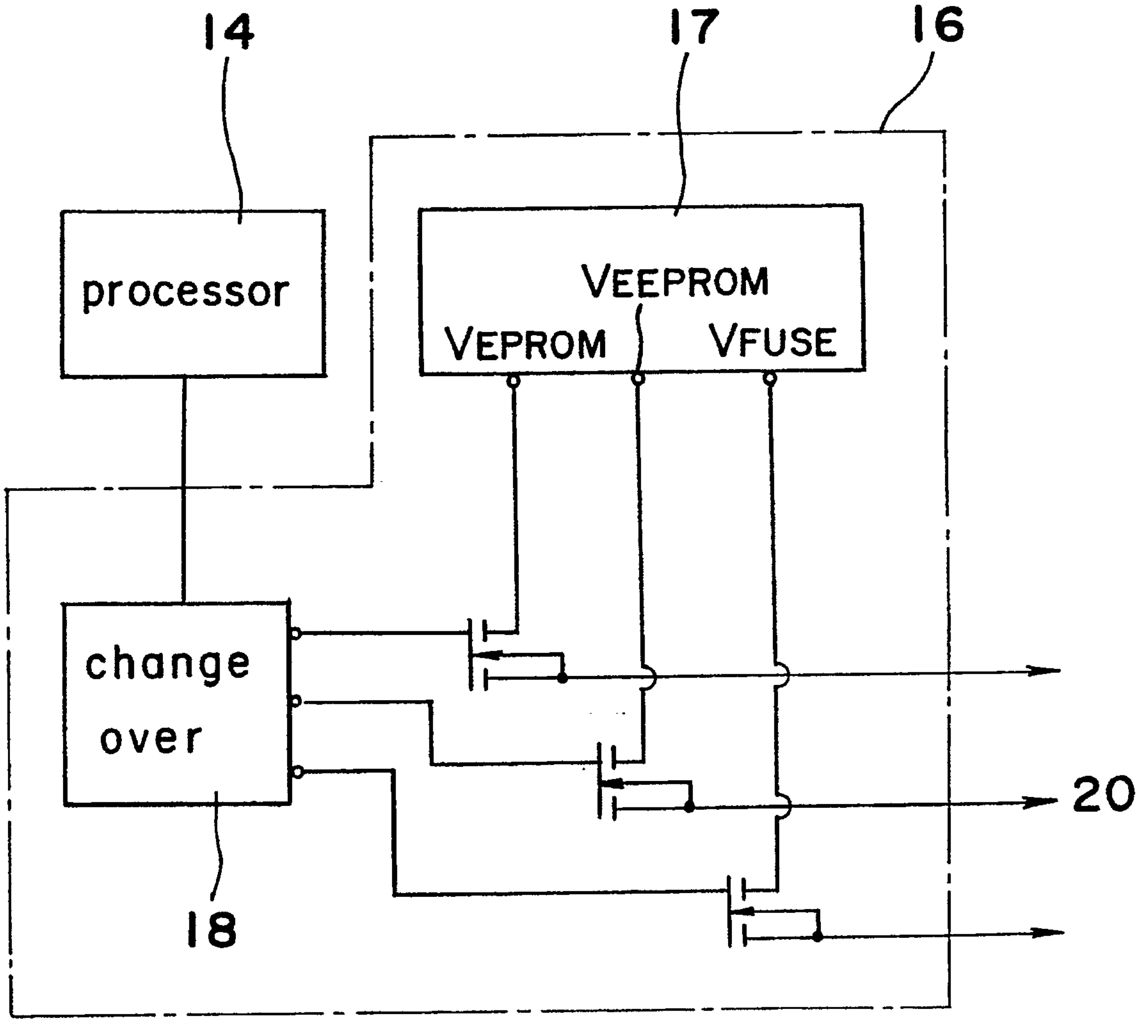

*Fig. 5*

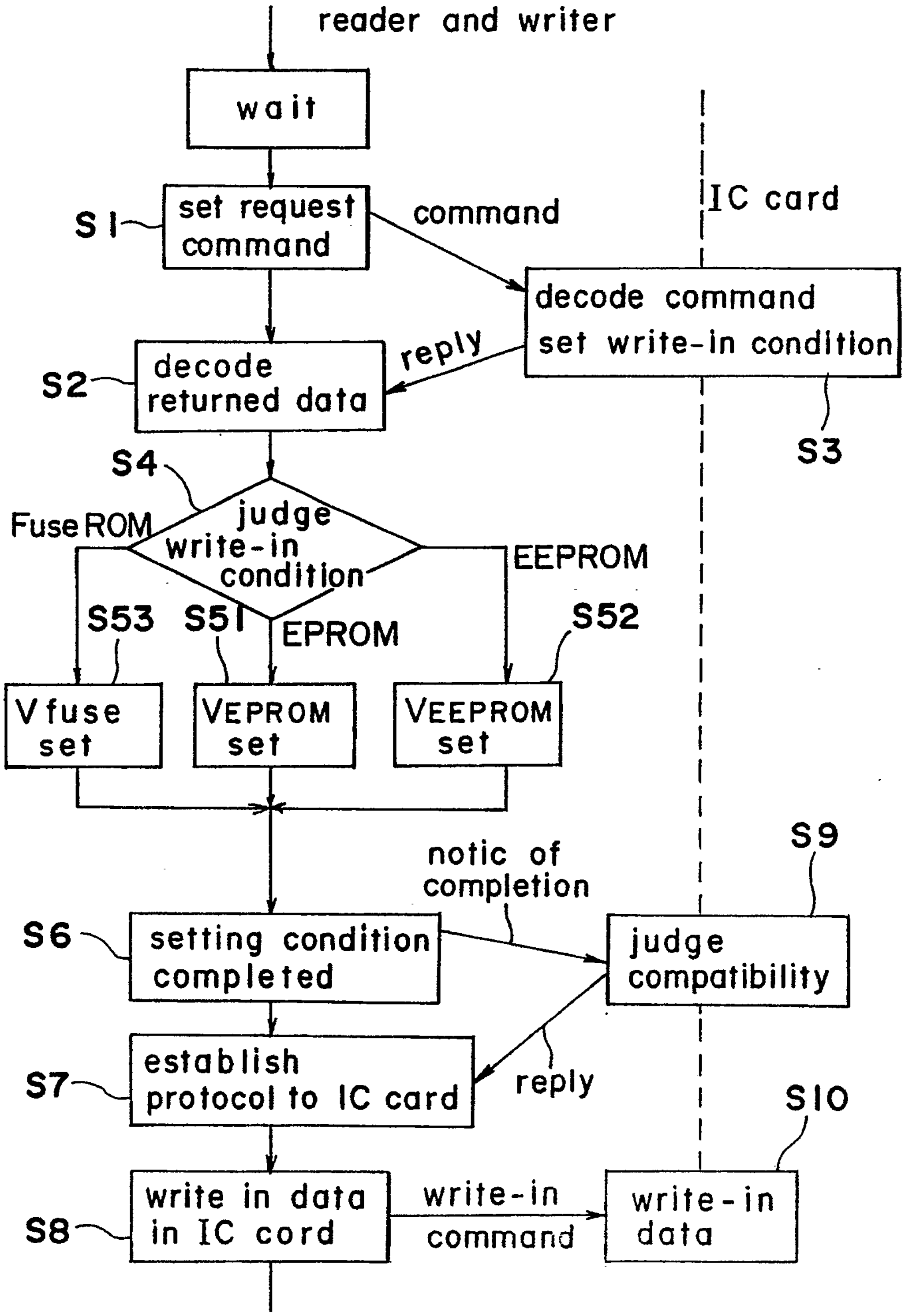
reader and writer
wait
S1
set request command
command
IC card
decode command
set write-in condition
S3
reply
S2
decode returned data
S4
judge write-in condition
Fuse ROM
EEPROM
EPROM
S53
S51
S52
Vfuse set
VEPROM set
VEEPROM set
notic of completion
S9
S6
setting condition completed
judge compatibility
S7
establish protocol to IC card
reply
S10
S8
write in data in IC cord
write-in command
write-in data

Fig. 6

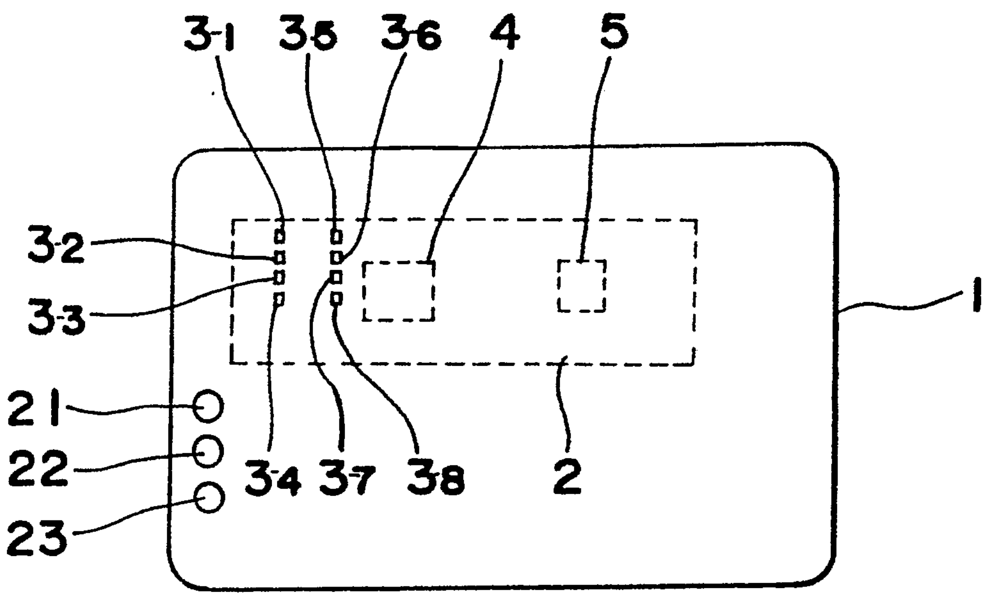


Fig. 7